# EUROPÄISCHE PATENTANMELDUNG

(11) **EP 2 065 121 A1**
(43) Veröffentlichungstag der Anmeldung: **03.06.2009**
(21) Anmeldenummer: 07023065.1
(22) Anmeldetag: 28.11.2007
(51) Int. Cl.: B23K 26/38, B23K 26/14

(54) **Fokussiervorrichtung mit Umlenkung für elektromagnetische Strahlung**

(71) Anmelder: SIEMENS AKTIENGESELLSCHAFT, 80333 München (DE)
(72) Erfinder: Laudien, Ulrich, 10555 Berlin (DE); Settegast, Silke, 10439 Berlin (DE)

(57) **Zusammenfassung**

Bei gekrümmten Bauteilen kann eine gradlinige Strahlführung bei einer Laserbearbeitung oft nicht verwendet werden, da der Laser und die dazugehörige Optik oft zu groß ist.

Erfindungsgemäß wird daher eine Fokussiervorrichtung (1) mit Strahlumlenkung vorgeschlagen, die durch entsprechende Linsen (10) und Spiegel (13) den relevanten Strahlbereich so verkleinert, dass eine Zuführung an kleineren Stellen möglich ist.

## Beschreibung

Die Erfindung betrifft eine Fokussiervorrichtung für elektromagnetische Wellen.

Elektromagnetische Wellen wie Laserstrahlen werden oft verwendet, um metallische, keramische Bauteile oder Schichtsysteme zu bearbeiten.
Dabei wird der Laserstrahl in verschiedener Art und Weise auf die Oberfläche des zu bearbeitenden Bauteils geführt. Bei schwer zugänglichen Bearbeitungsstellen, wie z.B. bei zu stark gekrümmten Oberflächen, kann es aufgrund der Größe der Laserapparatur zu Schwierigkeiten kommen, den Laserstrahl an die betreffende Stelle in einem bestimmten Winkel zu führen.

Es ist daher Aufgabe der Erfindung eine Fokussiervorrichtung für elektromagnetische Wellen aufzuzeigen, mit der oben genanntes Problem gelöst wird.

Die Aufgabe wird gelöst durch eine Fokussiereinrichtung mit Strahlumlenkung gemäß Anspruch 1.

In den Unteransprüchen sind weitere vorteilhafte Maßnahmen aufgelistet, die wiederum beliebig miteinander kombiniert werden können, um weiter Vorteile zu erzielen.

Es zeigen:
- Figur 1: eine Linsenanordnung nach dem Stand der Technik,
- Figur 2: schematisch die erfindungsgemäße Anordnung,
- Figur 3: schematisch die Aufteilung der Brennweite,
- Figur 4: ein Ausführungsbeispiel der erfindungsgemäßen Fokussiereinrichtung mit Strahlumlenkung,
- Figur 5: eine Gasturbine,
- Figur 6: perspektivisch eine Turbinenschaufel und
- Figur 7: eine Liste von Superlegierungen.

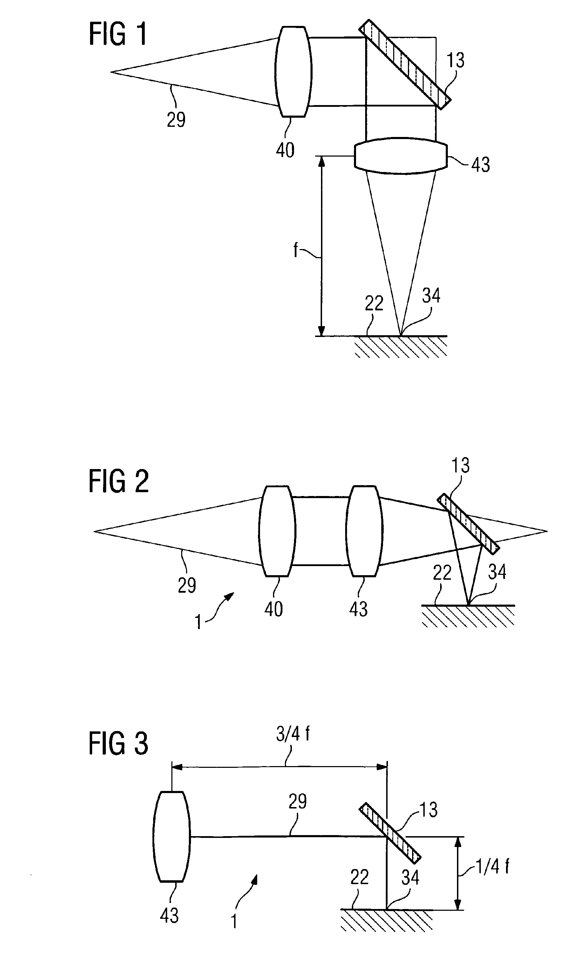

In Figur 1 ist eine Anordnung von Linsen 40, 43 und Spiegel 13 aus dem Stand der Technik dargestellt.

Die Laserstrahlen 29 oder allgemein elektromagnetische Strahlen 29 treffen auf eine Kollimatorlinse 40 und danach auf einen Spiegel 13, wodurch die Laserstrahlen 29 auf eine Fokussierlinse 43 umgelenkt werden, die 43 eine Brennweite f aufweist und bei der ein Fokussierpunkt an einer Bearbeitungsstelle 34 auf einem Substrat 22 liegt.

Die erfindungsgemäße Bauweise für eine Fokussiereinrichtung 1 ist schematisch in der Figur 2 dargestellt.

Anwendbar ist das Prinzip auf alle Arten elektromagnetischer Strahlung, wie z.B. Laserstrahlen, Röntgenstrahlung oder auch Elektronenstrahlen.
Die Fokussiereinrichtung 1 wird nur beispielhaft erläutert anhand von Laserstrahlen 29.

Die Laserstrahlen 29 treffen auf die Kollimatorlinse 40 und danach auf die Fokussierlinse 43, wobei ein Spiegel 13 hinter der Fokussierlinse 43 angeordnet ist, also vorzugsweise im Strahlengang zwischen Fokussierlinse 43 und Substrat 22, und die Laserstrahlen 29 auf die Bearbeitungsstelle 34 des Substrats 22 lenkt.
Der Spiegel 13 wird nur beispielhaft verwendet für eine Umlenkeinrichtung 13.

In Figur 3 ist schematisch eine vorzugsweise Aufteilung der Brennweite f der Fokussierlinse 43 dargestellt.

Die Brennweite f teilt sich auf zwischen dem Abstand der Fokussierlinse 43 zu dem Spiegel 13 und von dem Spiegel 13 zu der Oberfläche des Bauteils 22.
Die Zahlenwerte ¾ und ¼ sind nur beispielhaft.

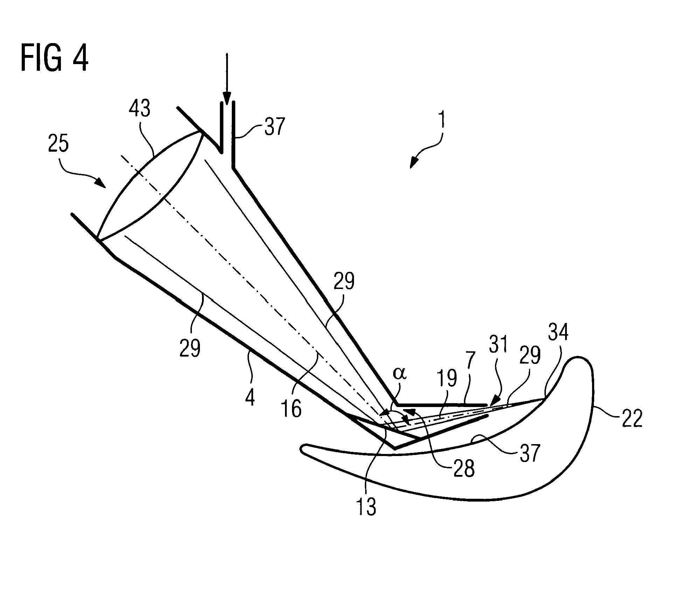

In Figur 4 ist eine weitere Fokussiervorrichtung 1 mit Strahlumlenkung für elektromagnetische Strahlen 29 gezeigt.

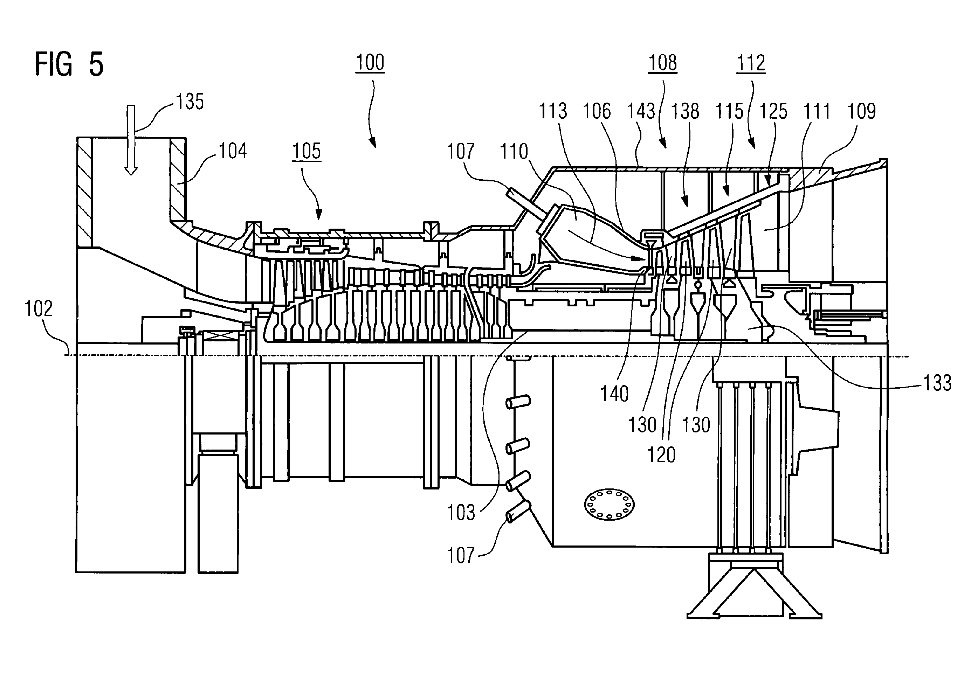

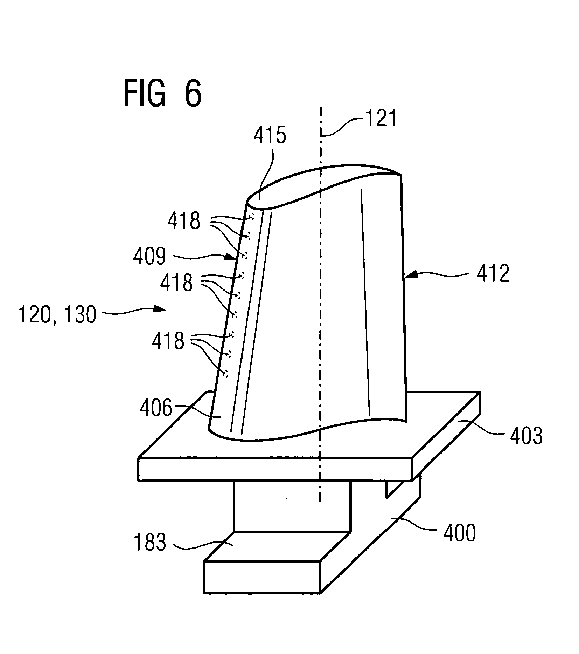

Das zu bearbeitende Bauteil 22 stellt hier beispielsweise eine Turbinenschaufel 120, 130 (Fig. 5, 6) dar, die eine derart gekrümmte Oberfläche 37 aufweist, dass die Bearbeitungsstelle 34 für konventionelle Bearbeitungsoptiken nicht zugänglich ist.
Die Fokussiereinrichtung 1 kann aber auch ebene Oberflächen bearbeiten.

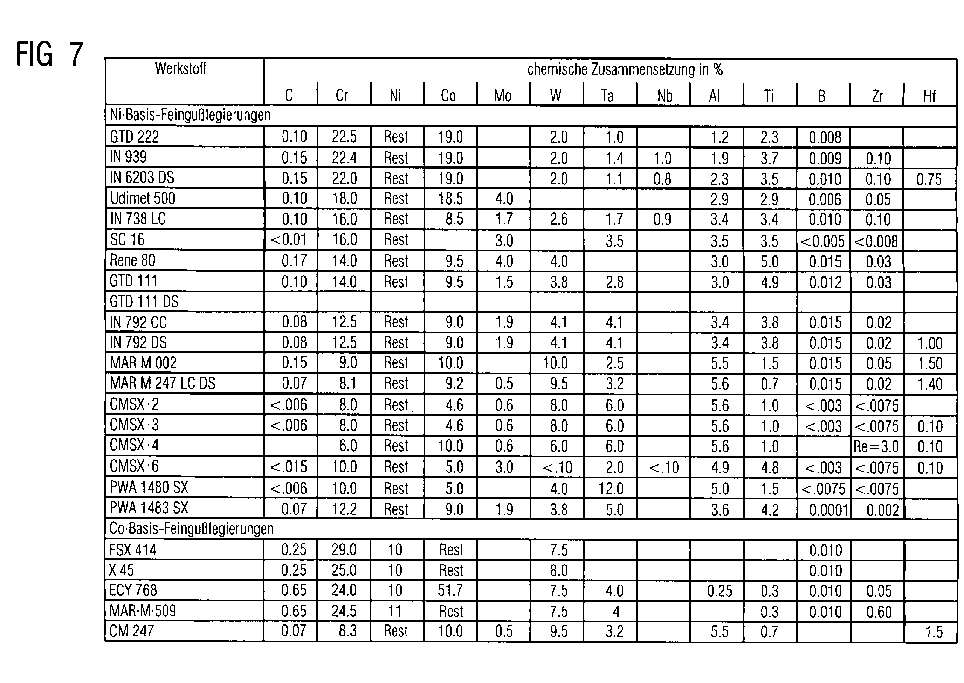

Das Substrat 22 weist vorzugsweise eine Superlegierung gemäß Figur 7 auf.
Vorzugsweise ist es ein Schichtsystem aus einem Substrat 22 mit metallischen und/oder keramischen Schichten auf dem Substrat 22.

Die Fokussiereinrichtung 1 weist vorzugsweise ein Gehäuse, vorzugsweise ein erstes Gehäuse 4 und ein zweites Gehäuse 7 auf.

Vorzugsweise sind die Gehäuse 4, 7 trichterförmig, insbesondere kegelförmig ausgebildet. Im Folgenden wird die Erfindung anhand der Trichter 4, 7 nur beispielhaft erläutert.
Der erste Trichter 4 erstreckt sich längs einer ersten Längsrichtung 16.
Die Verhältnis der Längen der Trichter 4, 7 ist unerheblich, da die Brennweite f gemäß Figur 3 beliebig aufgeteilt werden kann zwischen einem Bruchteil zwischen der Fokussierlinse 43 und dem Spiegel 13 und dem restlichen Anteil zwischen dem Spiegel 13 und der Bauteiloberfläche (Bearbeitungsstelle 34).

Der zweite Trichter 7 ist vorzugsweise kleiner, d.h. kürzer und vorzugsweise im maximalen Querschnitt kleiner ausgebildet als der erste Trichter 4. Der erste und zweite Trichter 7 grenzen aneinander an. Eine zweite Längsachse 19 des zweiten Trichters 7 verläuft unter einem von 180° verschiedenen Winkel α zu der ersten Längsachse 29. Vorzugsweise beträgt α zwischen <180° und 90°.
Marktüblich sind Spiegel für eine Strahlumlenkung von 90°.

Im Bereich einer Eingangsöffnung des Gehäuses, insbesondere in einer ersten Eingangsöffnung 25 des ersten Trichters 4, ist vorzugsweise die Fokussierlinse 43 vorhanden, die einkommende Laserstrahlen 29 auf eine Bearbeitungsstelle 34 des Bauteils fokussiert. Diese Laserstrahlen 29 werden auf eine Umlenkeinrichtung 13 für elektromagnetische Strahlen, insbesondere auf einen Spiegel 13, gelenkt.
Die Umlenkeinrichtung 13 befindet sich im Gehäuse 4, 7, vorzugsweise zum Teil im ersten Trichter 4 und zum anderen Teil in dem zweiten Trichter 7, der sich an eine erste Ausgangsöffnung 28 des ersten Trichters 4 anschließt.
Die Ausgangsöffnung 28 des ersten Trichters 4 entspricht im Querschnitt dem Querschnitt der zweiten Eingangsöffnung des zweiten Trichters 7.
Durch die Fokussierlinse 43 werden die Laserstrahlen 29 auf den Spiegel 13 gelenkt, von dem die Laserstrahlen 29 im Bereich einer zweiten Ausgangsöffnung 31 des zweiten Trichters 7 gelenkt werden.
Wie in Figur 3 gezeigt kann so eine Bearbeitungsstelle 34 im Bereich der gekrümmten Oberfläche 37 des Bauteils 22 bearbeitet werden. Verlängert man die Längsachse 19 des zweiten Trichters 7, also einen Zentralstrahl des Laserstrahlbündels 29, der das Bauteil 22, 120, 130 bearbeitet, so würde man erkennen, dass eine Hinterkante des gekrümmten Bauteils 22 geschnitten werden würde, so dass so eine Bearbeitung mit einem gradlinig geführten Laserstrahl nicht möglich wäre.

Der zweite Trichter 7 weist eine Ausgangsöffnung 31 auf, aus der die Laserstrahlen 29 austreten und auf das Bauteil 22 treffen.

Weiterhin kann die Fokussiereinrichtung 1 mehrere Trichter und gegebenenfalls entsprechend mehrere Umlenkvorrichtungen aufweisen, um die Laserstrahlen 29 schrittweise umzulenken.

Die Trichter 4, 7 können zueinander beweglich sein. Dabei wird vorzugsweise die Lage der Spiegel 13 entsprechend mitverstellt.

Optional weist die Fokussiereinrichtung eine Gaszufuhr 37 in das Gehäuse, vorzugsweise in den Trichter 4 oder in den Trichter 7 hinter der Fokussierlinse 43 auf, um ein Prozessgas in den Trichter 4 oder Trichter 7 einzuführen, das aus einer zweiten Ausgangsöffnung 31 des zweiten Trichters 7 zusammen mit dem Laserstrahl 29 auf das Bauteil 22 auftrifft. Als Prozessgas können insbesondere Luft, Argon, Sauerstoff oder Stickstoff verwendet werden.

Die Figur 5 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Fokussiervorrichtung (1) für elektromagnetische Strahlen (29),
insbesondere für Laserstrahlen (29),
zur Bearbeitung eines Substrats (22) an einer Bearbeitungsstelle (34),
die (1) aufweist:
eine Strahlenquelle,
eine Umlenkeinrichtung (13) für die elektromagnetischen Strahlen (29),
insbesondere ein Spiegel (13),
eine Fokussierlinse (43),
wobei die Umlenkeinrichtung (13) im Strahlengang der elektromagnetischen Strahlen (29) hinter der Fokussierlinse (43),
insbesondere zwischen dem Substrat (22) mit der Bearbeitungsstelle (34) und der Fokussierlinse (43), angeordnet ist.

2. Fokussiereinrichtung nach Anspruch 1,
bei der die Fokussierlinse (43) und die Umlenkeinrichtung (13) in einem Gehäuse (4, 7) angeordnet sind.

3. Fokussiervorrichtung nach Anspruch 2,
die (1) aufweist:
ein erstes Gehäuse (4) mit einer ersten Längsrichtung (16),
ein zweites Gehäuse (7) mit einer zweiten Längsrichtung (19),
die (4, 7) aneinander angrenzen,
wobei die Längsachsen (16, 19) des ersten und des zweiten Gehäuses (4, 7) unter einem von 180° verschiedenen Winkel (α) verlaufen.

4. Fokussiereinrichtung nach Anspruch 2 oder 3,
bei der die Umlenkeinrichtung (13) für elektromagnetische Strahlen (29),
insbesondere ein Spiegel (13),
im Gehäuse (4, 7),
insbesondere im Bereich des Übergangs zwischen erstem Gehäuse (4) und zweitem Gehäuse (7),
angeordnet ist.

5. Fokussiervorrichtung nach Anspruch 2, 3 oder 4,
bei der in einer Eingangsöffnung des Gehäuses, insbesondere in einer ersten Eingangsöffnung (25) des ersten Gehäuses (4),
die Fokussierlinse (43) angeordnet ist.

6. Fokussiervorrichtung nach Anspruch 2, 3, 4 oder 5,
bei der eine Gaszuführung (37) in ein Gehäuse (4, 7) vorhanden ist,
insbesondere im Bereich des ersten Gehäuses (4),
ganz insbesondere hinter dem Strahlengang nach der Fokussierlinse (43),
durch die (37) ein Prozessgas einführbar ist.

7. Fokussiervorrichtung nach Anspruch 3, 4, 5 oder 6,
bei der das zweite Gehäuse (7) kleiner ausgebildet ist als das erste Gehäuse (4).

8. Fokussiervorrichtung nach Anspruch 3, 4, 5, 6 oder 7, bei dem das erste Gehäuse (4) trichterförmig ausgebildet ist.

9. Fokussiervorrichtung nach Anspruch 3, 4, 5, 6, 7 oder 8, bei dem das zweite Gehäuse (7) trichterförmig ausgebildet ist.

10. Fokussiervorrichtung nach Anspruch 2, 4 oder 6,
die drei oder mehr Gehäuse aufweist.

11. Fokussiervorrichtung nach Anspruch 3, 4, 5, 6, 7, 8, 9 oder 10,
bei dem die Gehäuse (4, 7) zueinander verstellbar sind.
